# EUROPEAN PATENT SPECIFICATION

(11) **EP 2 545 766 B1**
(45) Date of publication and mention of the grant of the patent: **09.07.2014**
(21) Application number: 11174014.8
(22) Date of filing: 14.07.2011
(51) Int. Cl.: A01G 1/12, A47L 5/22

(54) **A debris blowing and/or vacuum appliance**
Reststoffabblas- und/oder -ansaugvorrichtung
Appareil pour souffler et/ou aspirer des débris

(43) Date of publication of application: 16.01.2013
(73) Proprietor: Black & Decker Inc., Newark, Delaware 19711 (US)
(72) Inventor: Armstrong, Jonathan, Crook, Durham DL15 0SX (GB); Hill, Steven, Wotton-under-Edge, Gloucestershire GL12 7DF (GB); Stones, Kevin, Bishop Auckland, Durham DL14 0PH (GB)
(74) Representative: Bell, Ian Stephen

(56) References cited:
- WO-A2-01/24676
- DE-A1- 19 959 344
- GB-A- 519 630
- US-A- 5 443 362

## Description

The present invention relates to a blower vacuum, vacuum or blower appliance. More particularly, the present invention relates to a blower vacuum, vacuum or blower appliance having improved efficiency.

An appliance according to the preamble of claim 1 is already known e.g. from WO-A- 0124676.

In general, blower vacuum appliances comprise a motor and fan arrangement. The motor is usually either petrol or electrically powered. The fan comprises a centrifugal impeller enclosed within a toroidal enclosure known as a volute. The impeller is configured, in use, to draw air in along the axis of rotation of the centrifugal impeller and expel air out radially. The volute comprises a fluid inlet surrounding the eye of the impeller and aligned with axis of rotation of the impeller, and a fluid outlet located at a point on the periphery of the volute. The shape of the volute essentially directs the radially-moving air towards the fluid outlet.

Blower vacuum appliances generally have two modes of operation: blowing and vacuuming. In the blowing mode, clean air is drawn into the volute from the atmosphere via the fluid inlet and is expelled via the fluid outlet. A blower tube is attached to the outlet in order to focus and direct the expelled air into a jet. This jet of air may be aimed through manipulation of the blower tube or blower vacuum to move or gather garden waste.

When in the vacuuming mode, garden waste may be collected up a suction tube connected to the blower vacuum. There are two common structural arrangements for a blower vacuum appliance having a vacuum mode: dirty fan and clean fan configurations.

In a dirty-fan arrangement, a suction tube having a suction inlet is connected to the fluid inlet of the volute and a debris collector (which may comprise separation means such as a semiporous bag or container) for garden waste is attached in direct fluid connection to the fluid outlet of the volute. Therefore, in this arrangement, the fan is located directly in the flowpath from the suction inlet to the debris collector. Consequently, garden waste or debris entrained in the air passing into the suction inlet passes through the fluid inlet of the volute and collides with the fan before being passed via the fluid outlet of the volute into the debris collector. This arrangement enables garden waste or debris to be broken down or mulched into smaller particles for efficient collection in the debris collector.

In a clean-fan arrangement, a debris collector (which may comprise separation means such as a semi-porous bag or container) for garden waste is also attached in direct fluid connection to the fluid outlet of the volute. However, in contrast, a suction tube comprising a suction inlet is connected downstream of the fluid outlet of the volute.

Therefore, in the same manner as for the blowing mode, in use air is drawn into the fluid inlet of the volute from the atmosphere and expelled from the volute through the fluid outlet towards the debris collector. The flow of air from the fluid outlet and into and through the debris collector causes a pressure differential between the proximal and distal ends of the suction tube. This causes air to be drawn into the suction inlet, through the suction tube and into the debris collector. Consequently, any garden waste or debris entrained in the air passing into the suction tube will be deposited into the debris collector.

This arrangement has the advantage that the fan is supplied with a clean stream of air at all times and so can operate under optimal conditions with relatively little chance of blockages forming.

An alternative arrangement of device is simply a blower appliance without a vacuum function. This arrangement operates in the same manner as the blower mode of the clean-fan arrangement. Clean air is drawn into a volute from the atmosphere via afluid inlet and is expelled via a fluid outlet. A blower tube attached to the fluid outlet focuses and directs the expelled air into a jet. This jet of air may be aimed through manipulation of the blower tube or blower vacuum to move or gather garden waste.

Blower vacuum and/or blower appliances are often required to generate high flow rates of air through the impeller to produce a powerful jet of air (in the blower mode) or powerful suction (in the vacuum mode, where appropriate) in order to clear an external environment of debris and waste. Therefore, it is beneficial to minimise losses in the appliance in order to maximise the available airflow.

Commonly, in a volute arrangement comprising a centrifugal impeller, air is directed through the eye of the impeller and is then directed radially outwardly therefrom. From the outlet of the impeller, the airflow passes into a volute which directs the airflow to an outlet. However, in conventional arrangements, the location of the impeller with regard to the walls of the volute mean that the pressure distribution created at the outlet to the impeller may not be constant. This reduces the efficiency of the impeller. As a result, there is a need in the art to provide an impeller arrangement which has lower losses than known arrangements.

According to a first aspect of the present invention, there is provided a debris blowing and/or vacuum appliance comprising a body including: a fluid inlet; a fluid outlet for exhausting fluid externally of the body; a volute located in a flowpath between the fluid inlet and the fluid outlet; and a centrifugal impeller located within the volute and rotatable by a motor to generate a flow of fluid between the fluid inlet and the fluid outlet, the volute comprising: volute walls delimiting a volute outlet region in communication with the fluid outlet; and a diffuser located immediately downstream of the centrifugal impeller between the centrifugal impeller and the volute outlet region, the diffuser comprising an annular channel surrounding the centrifugal impeller and having substantially constant radial width such that the impeller is radially spaced from the volute walls by at least the width of the diffuser.

By providing such an arrangement, the efficiency of the impeller can be improved. The use of such a diffuser configuration in an appliance enables the pressure drop across the impeller to be substantially even around the circumference thereof, improving the performance of the impeller. In a debris blowing and/or vacuum appliance, this enables a greater airflow to be supplied per unit of supplied power. Therefore, an appliance having improved performance for blowing and/or vacuuming dirt and debris can be provided without, for example, increasing power consumption. This is of relevance to battery powered appliances, where improved efficiency may provide stronger performance and a longer operating run time for a given battery size and charge.

In one embodiment, the diffuser is vaneless. A vaneless diffuser is particularly efficient for guiding an airflow from an impeller to the volute outlet region.

In one embodiment, the diffuser comprises planar annular walls defining the annular channel. By providing planar annular walls, losses in the diffuser are minimised.

In one embodiment, the volute walls define a volute outlet region having an expanding cross-sectional area in the downstream direction. By providing an outlet region with an expanding cross-sectional area, the pressure of the air moving towards the outlet can be reduced.

In one embodiment, the cross-sectional area increases smoothly in the downstream direction. This arrangement reduces losses due to sudden volume changes as the air moves downstream of the impeller.

In one embodiment, the volute walls define a scroll-type volute outlet region having a substantially circular cross section. Such an arrangement provides an efficient configuration with reduced losses.

In one embodiment, the volute outlet region further comprises a tangential portion extending downstream towards the fluid outlet. By providing such a tangential portion, the airflow can be directed into a linear stream to be passed to the fluid outlet.

In one embodiment, the volute further comprises a volute tongue delimiting at least a part of the tangential portion.

In one embodiment, the volute tongue is radially spaced from the impeller by a distance at least equal to the width of the diffuser. By spacing the volute tongue from the impeller by at least the width of the diffuser, localised pressure drops can be reduced downstream of the impeller outlet. This improves the efficiency of the impeller.

In one embodiment, the appliance is in the form of a vacuum appliance or a combined debris blowing and vacuum appliance, wherein the fluid inlet comprises a suction inlet arranged, in use, to draw dirt and debris therethrough. Such a configuration is an efficient device for cleaning and/or directing debris and waste from an area such as, for example, a garden.

In one embodiment, the appliance further comprises a suction tube, the suction inlet being located at a distal end of the suction tube. The suction tube enables a dire- and debris-entrained stream of air to be drawn efficiently into the appliance.

In one embodiment, the centrifugal impeller is arranged, in use, to receive and to mulch dirt and debris drawn in through the suction inlet. By providing such an arrangement, dirt and debris can be mulched (i.e. broken up) by the impeller into smaller sections. This enables the dirt and debris leaving the appliance to be packed more tightly and efficiently.

In one embodiment, the appliance further comprises a debris collector located downstream of the fluid outlet and arranged, in use, to collect dirt and debris drawn in through the suction inlet. This enables the dirt and debris drawn into the appliance to be captured securely for disposal.

In one embodiment, the appliance is in the form of a debris blowing appliance and further comprises a blower tube, the fluid outlet being located at a distal end of the blower tube. The blower tube enables a concentrated stream of air to be directed accurately as required by a user of the appliance.

Embodiments of the present invention will now be described in detail with reference to the accompanying drawings, in which:
Figure 1 is a side view showing the general configuration of a blower appliance;
Figure 2 is a side view showing the general configuration of a blower vacuum appliance;
Figure 3 is a cross-sectional view of a volute according to an embodiment of the present invention;
Figure 4 is a sectional plan view of the volute of Figure 3;
Figure 5 is a perspective view of part of the volute of Figure 3;
Figure 6 is a perspective view of an impeller according to an embodiment of the present invention;
Figure 7 is a perspective view showing the impeller of Figure 6 located in a part of the volute of Figure 3; and
Figure 8 is a detailed cross-sectional view of a part of the volute of Figure 3.

The present invention provides an impeller and volute arrangement which reduces inlet losses to the impeller when compared to known arrangements. Barrier means provided on the shroud of an impeller are located in close relationship with a complementary portion of the volute adjacent the air inlet.

The interaction between these components defines a convoluted or labyrinthine pathway between the shroud and the volute housing, reducing the likelihood of air passing therebetween and improving the flow of air into the eye of the impeller.

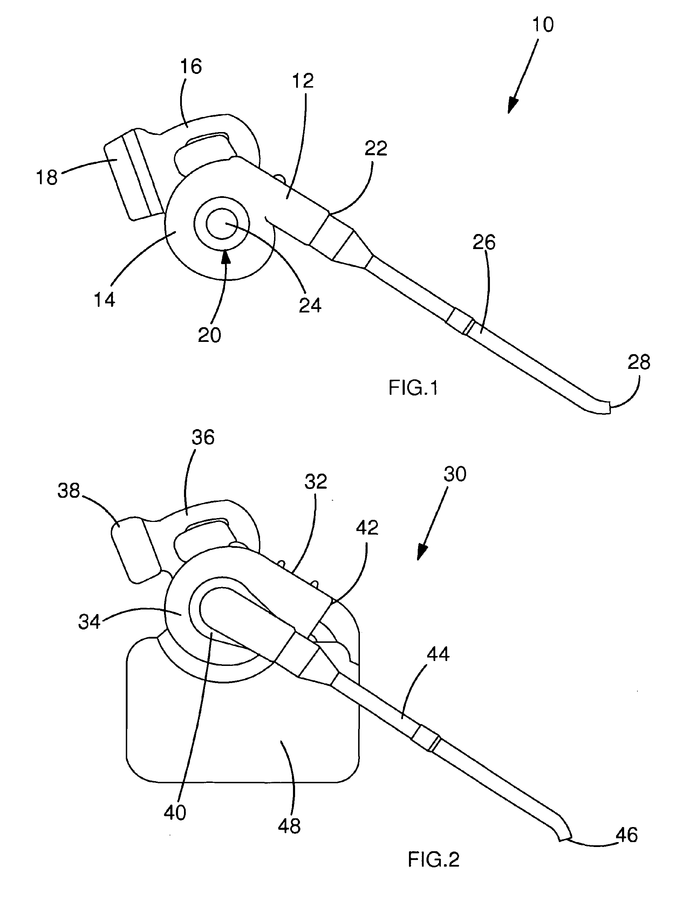

The general configuration of a blower appliance and a blower vacuum appliance will now be described with reference to Figures 1 and 2.

Figure 1 shows an example of a blower (or sweeper) appliance 10 in which embodiments of the present invention may be used. The blower appliance 10 is an electrically-powered appliance which comprises a battery pack. However, alternatively the blower appliance 10 may be mains-powered or comprise an internal combustion engine and fuel tank.

The blower appliance 10 comprises a body 12 which may be formed from a hardened plastic material. The body 12 comprises a volute 14 and a graspable handle 16. A removable power source 18 (in the form of a battery pack) is located at the base of the handle 16.

The volute 14 is essentially disc shaped and houses a motor and impeller arrangement (not shown in Figure 1) for generating an airflow through the blower appliance 10. The volute 14 comprises an air inlet 20 located at the centre of the disc-shaped volute 14 and an air outlet 22 extending tangentially away from the disc shaped portion of the volute 14.

The impeller is operable to draw an airflow through the air inlet 20 and exhaust the airflow through the air outlet 22. The air inlet 20, as shown, is covered by a grille or cover 24 which prevents a user contacting rotating parts located therein. The spacing of the grille 24 is such to prevent insertion of a human finger according to safety standard UL-1017 of Underwriters' Laboratory Inc..

A detachable blower tube 26 is connected to the air outlet 22 and comprises an exhaust outlet 28 at a distal end thereof. The blower tube 26 narrows from the adjacent the air outlet 22 to the exhaust outlet 28 to focus and direct the airflow into a powerful jet.

A blower vacuum appliance 30 is shown in Figure 2 in which embodiments of the present invention may be used. The blower vacuum appliance 30 is similar in configuration to the blower appliance 10 of Figure 1 and is an electrically-powered appliance which comprises a battery pack.

The blower vacuum appliance 30 comprises a body 32 comprising a volute 34 and a graspable handle 36. A removable power source 38 (in the form of a battery pack) is located at the base of the handle 36.

The volute 14 is essentially the same as that of the blower appliance 10 and houses a motor and impeller arrangement (not shown in Figure 2) for generating an airflow through the blower vacuum appliance 30. However, in this instance, the blower vacuum appliance 30 is a dirty-fan arrangement and so the impeller is configured to receive debris and mulch the debris.

The volute 34 comprises an air inlet 40 located at the centre of the disc-shaped volute 34 and an air outlet 42 extending tangentially away from the disc shaped portion of the volute 34. In this arrangement, a suction tube 44 is connected to the air inlet 40 and comprises a suction inlet 46 at a distal end thereof. The suction tube 44 is configured to draw air and entrained debris through the suction inlet 46 and into the volute 34 where the debris is mulched.

A debris collector 48 is connected directly to the air outlet 42 and provides a collection receptacle for the mulched debris passed through the volute 34. The debris collector 48 is semi-porous so that air can escape therethrough and may comprise, for example, a nylon bag or other collection means.

The blower vacuum appliance 30 as described above is shown in a vacuum mode of operation. In order to operate in a blower mode, the suction tube 44 can be detached and connected to the air outlet 42 in the manner of the blower appliance 10. A grille (not shown) can then be connected to the air inlet.

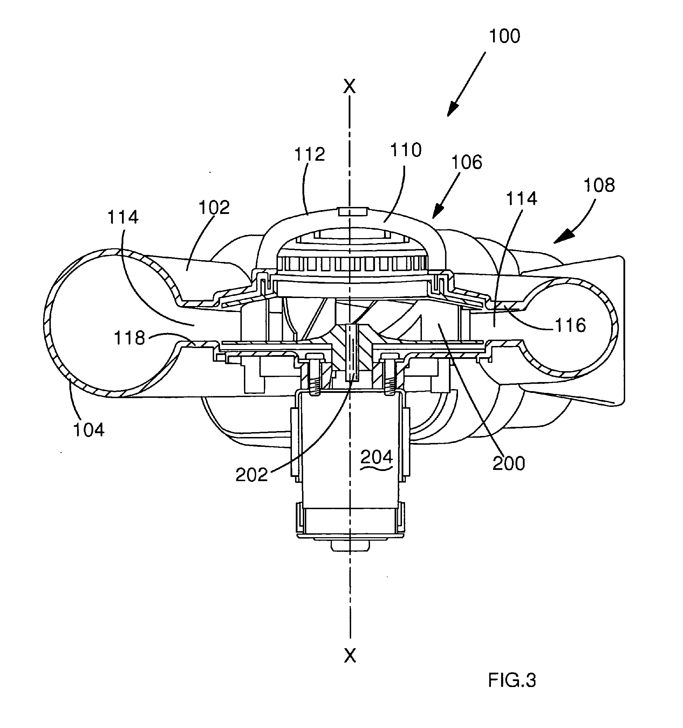

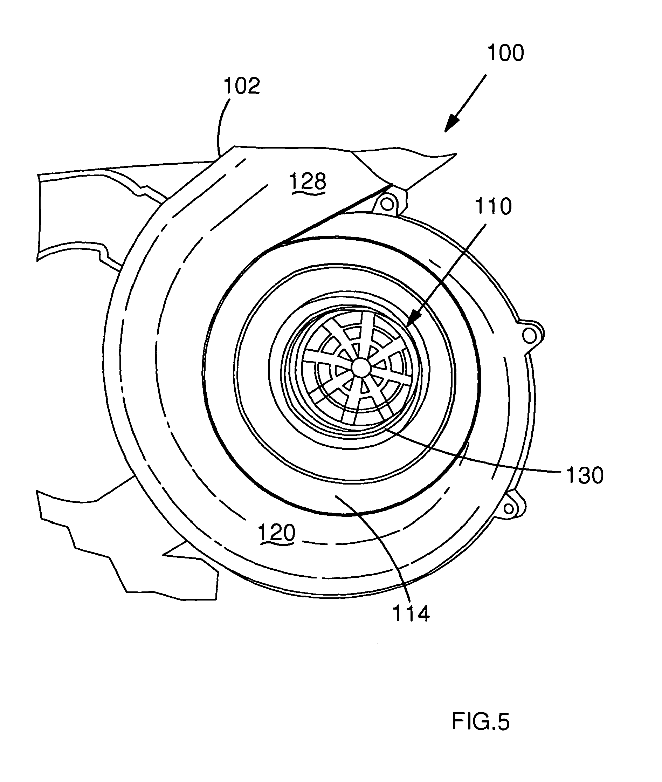

Figures 3 to 7 show the arrangement according to the present invention. Figures 3 to 7 shows a section through a volute assembly 100 according to an embodiment of the present invention.

Referring to Figures 3 to 6, the volute assembly 100 comprises first and second clamshell portions 102, 104. The clamshell portions 102, 104 define a central hub 106 and a scroll portion 108 located outwardly of the hub 106.

The hub 106 comprises an air inlet 110 located centrally at an upper portion thereof. The air inlet 110 is covered by a grille 112. An impeller 200 is located at the centre of the hub 106 in communication with the air inlet 110. The impeller 200 is mounted on a drive shaft 202 connected to a motor 204. The impeller 200, in use, is operable to rotate on the drive shaft 202 about an axis X-X which is coincident with the centre of the hub 106.

A diffuser 114 is located radially outwardly, and downstream, of the impeller 200 and comprises an annular channel delimited by two diffuser walls 116, 118. The diffuser 114 is located between the hub 106 and the scroll portion 108 of the volute 100 and has a narrower height that either the hub 106 or the scroll region 108.

The diffuser 114 is vaneless. That is to say no vanes, projections or guides are located in the annular channel comprising the diffuser 114 and the diffuser 114 essentially comprises a substantially smooth annular channel defined by the two planar, spaced apart annular walls 116, 118. The diffuser 114 is symmetrical about the axis X-X and has a constant height and width.

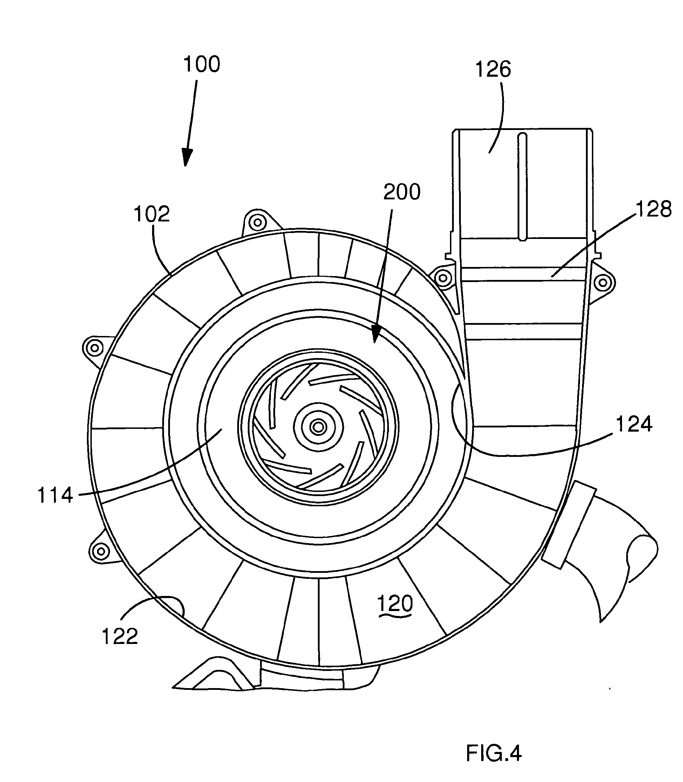

The scroll portion 108 is located in the flowpath immediately downstream of the diffuser 114. The scroll portion 108 comprises a spiral, scroll cavity 120 defined by volute walls 122. The volute walls 122 have a circular cross section which increases smoothly in diameter in an anticlockwise direction (as shown in Figure 4) from a position adjacent a volute tongue 124 located adjacent the outer portion of the diffuser 114 to terminate in an air outlet 126. In other words, the cross-sectional area of the volute outlet portion (scroll cavity 120) increases smoothly and constantly in the downstream direction towards the air outlet 126.

The air outlet 126 is formed at a distal end of a tangential section 128 of the scroll portion 108. As shown in Figure 4, the volute tongue 124 delimits a portion of the tangential section 128 leading to the air outlet 126.

As shown in Figures 3 and 4, the diffuser 114 functions to space the impeller 200 radially from the walls 122 of the scroll cavity 120. The impeller 200 is spaced radially from the walls 122 by at least the width of the diffuser walls 116, 118. This arrangement ensures that the pressure distribution at the outlet of the impeller 200 is substantially constant around the circumference of the impeller 200. This prevents localised pressure variations, improving the efficiency of the impeller 200.

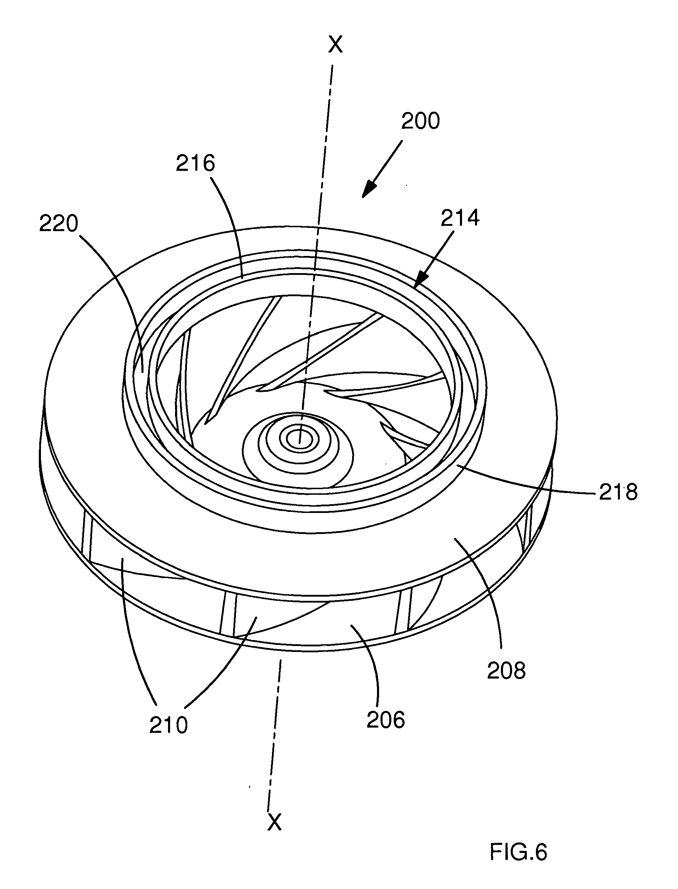

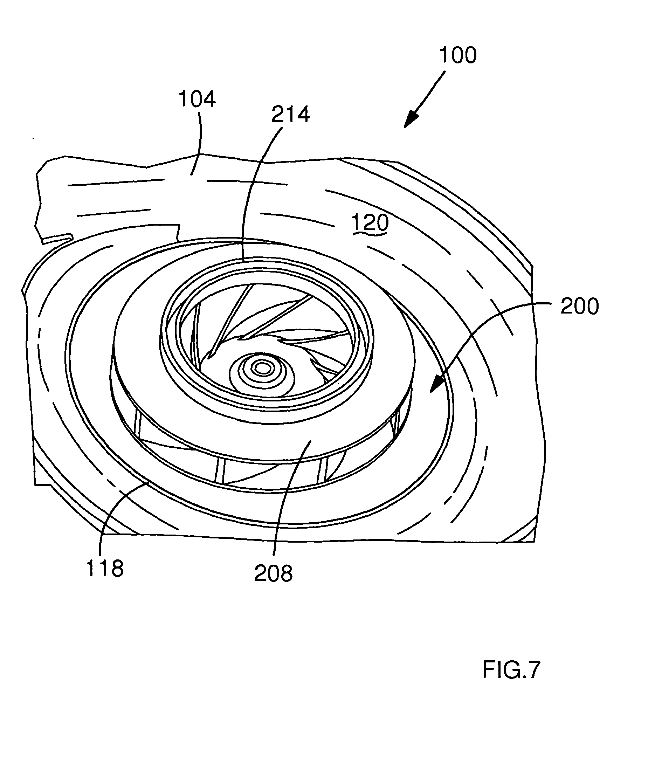

The impeller 200 will now be described in detail with reference to Figures 6 to 8. In Figure 6, the impeller 200 is shown removed from the volute arrangement 100. In Figure 7, the impeller 200 is shown located on the lower clamshell portion 104 with the upper clamshell portion 102 removed.

The impeller 200 includes a base 206, a shroud 208 and a plurality of fan blades 210 located therebetween. The base 206 extends radially from the axis X-X of the drive shaft 202 parallel to the diffuser 114. The fan blades 210 extend perpendicularly from the base 206 and are curved for aerodynamic efficiency. The shroud 208 delimits an axially-arranged inlet 212 to the eye of the impeller 200. When fitted in the volute 100, the inlet 212 to the impeller 200 is co-axial with, and located adjacent, the air inlet 110 formed in the hub 106 of the volute 100.

The shroud 208 comprises barrier means 214 located on a surface thereof facing away from the base 206. The barrier means 214 comprise two annular ribs 216, 218 which project away from the shroud 208 and surround the inlet 212. The innermost annular rib 216 forms a part of the boundary wall delimiting the inlet 212.

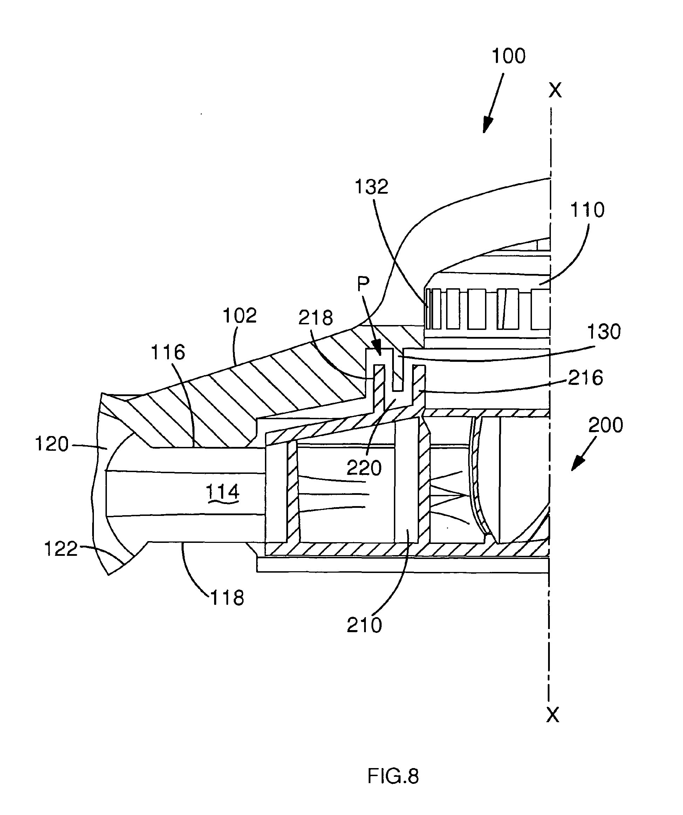

The annular ribs 216, 218 define an annular channel 220 therebetween. This is shown in Figure 8. Figure 8 shows a cross-sectional view (similar to Figure 3) through the volute 100 showing the impeller located in the hub 106 of the volute 100.

As shown in Figure 8, a complementary annular volute rib 128 is formed on the inner surface of the wall of the hub 106 of the volute 100. The annular volute rib 128 extends into the annular channel 220 formed by the annular ribs 216, 218, defining a convoluted or labyrinthine path from the air inlet 110 through the annular channel 220.

The volute rib 128 is spaced from the annular ribs 216, 218 in both axial and radial directions to ensure that, in use, tolerances are sufficient to prevent contact between the volute rib 128 and the annular ribs 216, 218 (which will be rotating with the impeller 200).

As shown in Figure 8, an internal inlet wall 130 of the inlet 110 is located at the same radial spacing as the inner annular wall 216 to define an essentially smooth (with the exception of the necessary axial spacing between the annular wall 216 and the internal inlet wall 130) inlet flowpath for air entering the inlet 110 and passing through the inlet 212 into the eye of the impeller 200.

In use, when the motor 204 is activated by a user, the drive shaft 202 will be caused to rotate. The impeller 200, which is secured to the drive shaft 202, will also be caused to be rotated. Thus, an airflow is drawn in through the volute inlet 110 and through the inlet 212 of the impeller 200. The air is then guided onto the fan blades 210 where it is accelerated and dispersed radially outwardly by the fan blades 210. This causes a pressure drop across the impeller 200 since the air downstream of the impeller 200 is moving faster than the upstream airflow. This, in turn, causes further air to be drawn into the volute inlet 110 and into the impeller 200.

In conventional centrifugal impeller arrangements, the pressure drop at the outlet of the impeller may not be substantially constant around the circumference of the impeller. This is due to the varying radial distance between the outlet of the impeller and the walls of the volute in conventional arrangements. This reduces the efficiency of the impeller.

However, in the present invention, the provision of the vaneless diffuser 114 provides a constant-width outlet region with no projections or unnecessary contact surfaces to disturb the airflow exiting the impeller. The pressure drop at the impeller outlet is, thus, substantially constant around the circumference of the impeller 200. As a result, the impeller 200 is able to operate at a high efficiency.

The airflow then passes through the fan blades 210, across the diffuser 114 and is exhausted into the scroll portion 108 of the volute 100. The airflow is then directed around the volute walls 122 towards the tangential portion 128 and through the air outlet 126.

Variations of the above embodiments will be apparent to the skilled person. The precise configuration of components may differ and still fall within the scope of the present invention.

Whilst the above embodiment has been described with reference to a "clean fan" impeller arrangement, the invention is equally applicable to "dirty fan" impeller arrangements in which dirt and debris is drawn into the impeller inlet and broken up (or mulched) by the impeller before being passed out of the impeller outlet into the volute outlet region and out of the fluid outlet. The mulched dirt and debris may then be collected in a suitable debris collector such as a semi-porous bag.

Further, whilst the present invention has been described with reference to blower or blower vacuum appliances generally for use in a domestic environment, the invention is readily applicable to other machines comprising centrifugal impellers. For example, the present invention is equally applicable to a domestic or industrial vacuum cleaner.

Embodiments of the present invention have been described with particular reference to the examples illustrated. While specific examples are shown in the drawings and are herein described in detail, it should be understood, however, that the drawings and detailed description are not intended to limit the invention to the particular form disclosed. It will be appreciated that variations and modifications may be made to the examples described within the scope of the present invention.

## Claims

1. A debris blowing and/or vacuum appliance comprising a body including:
a fluid inlet (110),
a fluid outlet (126) for exhausting fluid externally of the body;
a volute (100) located in a flowpath between the fluid inlet and the fluid outlet; and
a centrifugal impeller (200) located within the volute and rotatable by a motor (204) to generate a flow of fluid between the fluid inlet and the fluid outlet, the volute comprising:
volute walls (122) delimiting a volute outlet region in communication with the fluid outlet; **characterized in that** the volute further comprises
a diffuser (114) located immediately downstream of the centrifugal impeller between the centrifugal impeller and the volute outlet region, the diffuser comprising an annular channel surrounding the centrifugal impeller and having substantially constant radial width such that the impeller is radially spaced from the volute walls by at least the width of the diffuser.

2. An appliance according to claim 1, wherein the diffuser is vaneless.

3. An appliance according to claim 2, wherein the diffuser comprises planar annular walls defining the annular channel.

4. An appliance according to claim 1, 2 or 3, wherein the volute walls define a volute outlet region having an expanding cross-sectional area in the downstream direction.

5. An appliance according to claim 4, wherein the cross-sectional area increases smoothly in the downstream direction.

6. An appliance according to claim 4 or 5, wherein the volute walls define a scroll-type volute outlet region having a substantially circular cross section.

7. An appliance according to any one of the preceding claims, wherein the volute outlet region further comprises a tangential portion extending downstream towards the fluid outlet.

8. An appliance according to claim 7, wherein the volute further comprises a volute tongue delimiting at least a part of the tangential portion.

9. An appliance according to claim 8, wherein the volute tongue is radially spaced from the impeller by a distance at least equal to the width of the diffuser.

10. An appliance as claimed in any one of the preceding claims in the form of a vacuum appliance or a combined debris blowing and vacuum appliance, wherein the fluid inlet comprises a suction inlet arranged, in use, to draw dirt and debris therethrough.

11. An appliance as claimed in claim 10, further comprising a suction tube, the suction inlet being formed at a distal end of the suction tube.

12. An appliance as claimed in claim 10 or 11, wherein the centrifugal impeller is arranged, in use, to receive and to mulch dirt and debris drawn in through the suction inlet.

13. An appliance as claimed in claim 10, 11 or 12, further comprising a debris collector located downstream of the fluid outlet and arranged, in use, to collect dirt and debris drawn in through the suction inlet.

14. An appliance as claimed in any one of claims 1 to 9 in the form of a debris blowing appliance, the appliance further comprising a blower tube, the fluid outlet being formed at a distal end of the blower tube.

## Patentansprüche

1. Abfallblas- und/oder -sauggerät, umfassend einen Körper mit:
einem Fluideinlass (110),
einem Fluidauslass (126) zum Entleeren von Fluid nach außerhalb des Körpers;
einer Schnecke (100), die sich in einem Stromweg zwischen dem Fluideinlass und dem Fluidauslass befindet; und
einem Radiallaufrad (200), das sich innerhalb der Schnecke befindet und durch einen Motor (204) zum Erzeugen eines Fluidstroms zwischen dem Fluideinlass und dem Fluidauslass drehbar ist, die Schnecke umfassend:
Schneckenwände (122), die einen Schneckenauslassbereich in Verbindung mit dem Fluidauslass begrenzen;
**dadurch gekennzeichnet, dass** die Schnecke ferner Folgendes umfasst:
einen Diffusor (114), der sich dem Radiallaufrad unmittelbar nachgeschaltet zwischen dem Radiallaufrad und dem Schneckenauslassbereich befindet, der Diffusor umfassend einen ringförmigen Kanal, welcher das Radiallaufrad umgibt und im Wesentlichen konstante radiale Breite aufweist, sodass das Laufrad um zumindest die Breite des Diffusors radial von den Schneckenwänden beabstandet ist.

2. Gerät nach Anspruch 1, wobei der Diffusor schaufelfrei ist.

3. Gerät nach Anspruch 2, wobei der Diffusor plane ringförmige Wände umfasst, die den ringförmigen Kanal definieren.

4. Gerät nach einem der Ansprüche 1, 2 oder 3, wobei die Schneckenwände einen Schneckenauslassbereich mit einer sich ausdehnenden Querschnittsfläche in der stromabwärtigen Richtung definieren.

5. Gerät nach Anspruch 4, wobei die Querschnittsfläche gleichmäßig in der stromabwärtigen Richtung zunimmt.

6. Gerät nach einem der Ansprüche 4 oder 5, wobei die Schneckenwände einen spiralartigen Schneckenauslassbereich mit einem im Wesentlichen kreisförmigen Querschnitt definieren.

7. Gerät nach einem der vorhergehenden Ansprüche, wobei der Schneckenauslassbereich ferner einen Tangentialabschnitt umfasst, der stromabwärts zum Fluidauslass hin verläuft.

8. Gerät nach Anspruch 7, wobei die Schnecke ferner eine Schneckenzunge umfasst, die zumindest einen Teil des Tangentialabschnitts begrenzt.

9. Gerät nach Anspruch 8, wobei die Schneckenzunge radial um einen Abstand vom Laufrad beabstandet ist, der zumindest gleich der Breite des Diffusors ist.

10. Gerät nach einem der vorhergehenden Abschnitte in der Form eines Sauggeräts oder eines kombinierten Abfallblas- und -sauggeräts, wobei der Fluideinlass einen Saugeinlass umfasst, der im Gebrauch zum Ziehen von Schmutz und Schmutz dort hindurch angeordnet ist.

11. Gerät nach Anspruch 10, ferner umfassend ein Saugrohr, wobei der Saugeinlass an einem distalen Ende des Saugrohrs ausgebildet ist.

12. Gerät nach einem der Ansprüche 10 oder 11, wobei das Radiallaufrad im Gebrauch zum Aufnehmen und Mulchen von Schmutz und Abfall, der durch das Saugrohr eingezogen ist, angeordnet ist.

13. Gerät nach einem der Ansprüche 10, 11 oder 12, ferner umfassend einen Abfallsammler, der dem Fluidauslass nachgeschaltet angeordnet ist und im Gebrauch zum Sammeln von Schmutz und Abfall angeordnet ist, welcher durch den Saugeinlass eingezogen ist.

14. Gerät nach einem der Ansprüche 1 bis 9 in der Form eines Abfallblasgeräts, das Gerät ferner umfassend ein Blasrohr, wobei der Fluidauslass an einem distalen Ende des Blasrohrs ausgebildet ist.

## Revendications

1. Appareil pour souffler et/ou aspirer des débris, comprenant un corps comportant :
une entrée de fluide (110),
une sortie de fluide (126) pour évacuer un fluide à l'extérieur du corps ;
une volute (100) située dans une voie d'écoulement entre l'entrée de fluide et la sortie de fluide ; et
une roue centrifuge (200) située à l'intérieur de la volute et pouvant être mise en rotation par un moteur (204) pour générer un écoulement de fluide entre l'entrée de fluide et la sortie de fluide, la volute comprenant :
des parois de volute (122) délimitant une région de sortie de volute en communication avec la sortie de fluide ;
**caractérisé en ce que** la volute comprend en outre :
un diffuseur (114) situé immédiatement en aval de la roue centrifuge entre la roue centrifuge et la région de sortie de volute, le diffuseur comprenant un canal annulaire entourant la roue centrifuge et ayant une largeur radiale sensiblement constante de sorte que la roue soit sensiblement espacée des parois de volute d'au moins la largeur du diffuseur.

2. Appareil selon la revendication 1, dans lequel le diffuseur est sans ailette.

3. Appareil selon la revendication 2, dans lequel le diffuseur comprend des parois annulaires planes définissant le canal annulaire.

4. Appareil selon la revendication 1, 2 ou 3, dans lequel les parois de volute définissent une région de sortie de volute ayant une surface en coupe transversale croissante dans la direction en aval.

5. Appareil selon la revendication 4, dans lequel la surface en coupe transversale augmente régulièrement dans la direction en aval.

6. Appareil selon la revendication 4 ou 5, dans lequel les parois de volute définissent une région de sortie de volute en spirale ayant une coupe transversale sensiblement circulaire.

7. Appareil selon l'une quelconque des revendications précédentes, dans lequel la région de sortie de volute comprend en outre une portion tangentielle s'étendant en aval vers la sortie de fluide.

8. Appareil selon la revendication 7, dans lequel la volute comprend en outre une langue de volute délimitant au moins une partie de la portion tangentielle.

9. Appareil selon la revendication 8, dans lequel la langue de volute est espacée radialement de la roue d'une distance au moins égale à la largeur du diffuseur.

10. Appareil selon l'une quelconque des revendications précédentes sous la forme d'un appareil d'aspiration ou d'un appareil combiné de soufflage et d'aspiration de débris, dans lequel l'entrée de fluide comprend une entrée d'aspiration agencée, en utilisation, pour tirer des impuretés et des débris à travers celle-ci.

11. Appareil selon la revendication 10, comprenant en outre un tube d'aspiration, l'entrée d'aspiration étant formée à une extrémité distale du tube d'aspiration.

12. Appareil selon la revendication 10 ou 11, dans lequel la roue centrifuge est agencée, en utilisation, pour recevoir et déchiqueter les impuretés et les débris tirés à travers l'entrée d'aspiration.

13. Appareil selon la revendication 10, 11 ou 12, comprenant en outre un collecteur de débris situé en aval de la sortie de fluide et agencé, en utilisation, pour collecter les impuretés et les débris tirés à travers l'entrée d'aspiration.

14. Appareil selon l'une quelconque des revendications 1 à 9 sous la forme d'un appareil de soufflage de débris, l'appareil comprenant en outre un tube de soufflage, la sortie de fluide étant formée à une extrémité distale du tube de soufflage.
